# EUROPÄISCHE PATENTSCHRIFT

(11) **EP 3 404 210 B1**
(45) Veröffentlichungstag und Bekanntmachung des Hinweises auf die Patenterteilung: **31.07.2024**
(21) Anmeldenummer: 17171141.9
(22) Anmeldetag: 15.05.2017
(51) Int. Cl.: F01D 9/04, F01D 5/14

(54) **SCHAUFELGITTERSEGMENT FÜR EINE STRÖMUNGSMASCHINE MIT ACHSEN-ASYMMETRISCHER PLATTFORMOBERFLÄCHE, ZUGEHÖRIGE SCHAUFELGITTER, SCHAUFELKANAL, PLATTFORM, UND STRÖMUNGSMASCHINE**
BLADE CASCADE SEGMENT FOR A TURBOMACHINE WITH NON-AXISYMMETRIC PLATFORM SURFACE, CORRESPONDING BLADE CASCADE, BLADE CHANNEL, PLATFORM, AND TURBOMACHINE
SEGMENT DE GRILLE D'AUBES D'UNE TURBOMACHINE AVEC PAROI DE PLATEFORME NON-AXISYMÉTRIQUE , GRILLE D'AUBES, CANAL D'AUBE, PLATEFORME, TURBOMACHINE ASSOCIÉS

(43) Veröffentlichungstag der Anmeldung: 21.11.2018
(73) Patentinhaber: MTU Aero Engines AG, 80995 München (DE)
(72) Erfinder: Brettschneider, Markus, 85757 Karlsfeld (DE); Mahle, Inga, 77880 Sasbach (DE); Maatouk, Fadi, 80807 München (DE)

(56) Entgegenhaltungen:
- EP-A1- 2 241 723
- EP-A2- 2 589 752
- EP-A2- 2 787 172
- WO-A1-2013/009449
- WO-A2-2011/039352

## Beschreibung

Die vorliegende Erfindung betrifft ein Schaufelgittersegment, ein Schaufelgitter, eine Plattform und einen Schaufelkanal einer Strömungsmaschine sowie eine Strömungsmaschine.

Strömungsmaschinen (wie Gas- und Dampfturbinen) weisen regelmäßig einen Strömungskanal zur Durchführung eines Fluids auf. Der Strömungskanal, der auch als "Ringraum" bezeichnet wird, ist nach radial innen durch eine radial innere Seitenwand, die beispielsweise durch radial innere Laufschaufelplattformen oder durch radial innere Leitschaufelplattformen gebildet sein kann und die nabenseitig angeordnet ist, und nach radial außen durch eine radial äußere Seitenwand, die beispielsweise durch radial äußere Laufschaufelplattformen (auch als "Deckband" bezeichnet) oder durch radial äußere Leitschaufelplattformen gebildet sein kann und die gehäuseseitig angeordnet ist; die Bezeichnungen "radial" ebenso wie "axial" und "Umfangsrichtung" sowie davon abgeleitete Begriffe sind in dieser Schrift - sofern nichts anderes angegeben ist - in Bezug auf eine Rotationsachse des Rotors zu verstehen.

Im Ringraum einer Strömungsmaschine sind Schaufelgitter angeordnet (für die auch die Bezeichnung "Schaufelkranz" üblich ist). Sie umfassen jeweils Leit- oder Laufschaufeln, die in Umfangsrichtung in im Wesentlichen regelmäßigen Abständen hintereinanderliegen, sowie zugehörige Plattformen, die bei Laufschaufeln auch als "Deckbänder" bezeichnet werden und die in der Regel jeweils eine anströmseitige und eine abströmseitige Plattformkante aufweisen. Diese Plattformkanten begrenzen die Plattformoberfläche in axialer Richtung; als "Plattformoberfläche" wird dabei in dieser Schrift die dem Ringraum zugewandte Oberfläche der Plattform bezeichnet.

Der Rand der Plattform, den der im Betrieb durch den Ringraum der Strömungsmaschine führende (axiale) Hauptstrom zuerst passiert, wird in dieser Schrift "anströmseitige" Plattformkante genannt; als "abströmseitige" Plattformkante wird entsprechend der gegenüber liegende Rand bezeichnet. Die Angaben "stromab" bzw. "stromauf" beziehen sich entsprechend auf die axiale Hauptstromrichtung und dabei lediglich auf die axiale Position, also ungeachtet einer möglichen Verschiebung in Umfangs- oder radialer Richtung. Insbesondere ist ein Punkt in dieser Schrift als "stromab der Anströmkanten" liegend zu verstehen, wenn er in/mit Hauptstromrichtung (also ihr folgend) versetzt zu einer direkten Verbindung der Anströmkanten (miteinander) an der Plattformoberfläche axial angeordnet ist; Analoges gilt für die Bezeichnung "stromauf" (mit entgegengesetzter Richtung).

Der Abschnitt der Plattformoberfläche, der in axialer Richtung durch die direkten (also in Umfangsrichtung ohne axiale Abweichungen verlaufenden) Verbindungen der Anströmkanten bzw. der Abströmkanten benachbarter Schaufelblätter an der Plattformoberfläche begrenzt ist und in Umfangsrichtung durch die Druckseite des einen und die Saugseite des anderen Schaufelblattes, wird in dieser Schrift als "Schaufelzwischenstreifen" bezeichnet. Die Ausdehnung des Schaufelzwischenstreifens in Umfangsrichtung an den Anströmkanten wird "Teilungsabstand" (des Schaufelgitters bzw. eines Schaufelgittersegments bzw. der Schaufelblätter) genannt. Er kann insbesondere als Abstand der Anströmkanten benachbarter Schaufeln in Umfangsrichtung im Bereich der Plattformoberfläche gemessen werden. Der (allein) in axialer Richtung (der Richtung des vorgesehenen axialen Hauptstroms) gemessene Abstand der Anströmkanten der Schaufelblätter von ihren Abströmkanten wird (axiale) "Gitterbreite" genannt.

Die Druckseite eines Schaufelblattes und die Saugseite eines benachbarten Schaufelblattes begrenzen in Umfangsrichtung jeweils einen sogenannten Schaufelkanal. In radialer Richtung wird dieser Schaufelkanal innerhalb der Strömungsmaschine durch radial innere und radial äußere Seitenwände begrenzt. Im Falle von Laufschaufeln werden die Seitenwände durch gegenüberliegende Laufschaufelplattformen gebildet, im Falle von Leitschaufeln durch eine gehäuseseitige radial äußere Leitschaufelplattform und eine gegenüberliegende nabenseitige radial innen liegende Plattform der Leitschaufel oder eine radial innen liegende Plattform eines anderen Statorteils.

Eine durch einen Strömungskanal geführte Fluidströmung wird regelmäßig durch die Oberflächen der Seitenwände beeinflusst. Strömungsschichten, die nahe an diesen Oberflächen verlaufen, werden dabei aufgrund ihrer geringeren Geschwindigkeit stärker abgelenkt als von den Seitenwänden fernere Strömungsschichten. So entsteht eine Sekundärströmung, die einem axialen Hauptstrom überlagert ist und die insbesondere zu Wirbeln und Druckverlusten führt.

Zur Verringerung der Sekundärströmungen werden die Seitenwände häufig mit Konturierungen in Form von Erhebungen und/oder Vertiefungen versehen.

Aus dem Stand der Technik ist eine Vielzahl von derartigen sogenannten "Seitenwandkonturierungen" bekannt. Insbesondere können die Plattformen achsen-asymmetrisch (was auch als "nicht-achsensymmetrisch" oder "nicht-axialsymmetrisch" bezeichnet wird) sein: Das bedeutet, dass sich entlang mindestens einer rein in Umfangsrichtung zwischen den Schaufelblättern verlaufenden Bahn (bzw. Linie) die Höhe der Plattformoberfläche (im Vergleich zu einem Nullniveau) ändert.

Beispielsweise ist aus der US 8 439 643 B2 eine Konturierung einer Plattform bekannt, bei der an der Druckseite eines ersten Schaufelblattes und an der Saugseite eines zweiten Schaufelblattes je eine Erhebung und eine Vertiefung angeordnet sind. Die Vertiefungen sind dabei über einen Sattel verbunden, und die Erhebungen liegen an verschiedenen Seiten des Sattels.

Die Druckschrift EP 3 064 706 A1 offenbart eine Leitschaufelreihe für eine axial durchströmte Strömungsmaschine mit unterschiedlich ausgebildeten achsen-asymmetrischen Schaufelkanälen.

Aus der Druckschrift US 8 884 182 B2 ist ein Verfahren zum Einrichten einer Seitenwandkonturierung durch Erzeugen eines Schmelzbades mittels eines Lasers bekannt, wobei das Verfahren nachträglich angewandt werden kann, wenn Plattform und Schaufeln bereits montiert wurden, oder sogar an bereits verwendeten Rotoren.

Weitere Beispiele sind aus den Dokumenten EP2787172A2, EP2589752A2, EP2241723A1 und WO2011039352A2 bekennt.

Aufgabe der vorliegenden Erfindung ist es, eine Technik bereitzustellen, mit der Sekundärströme im Ringraum einer Strömungsmaschine auf vorteilhafte Weise weiter reduziert werden können.

Die Aufgabe wird gelöst durch ein Schaufelgittersegment gemäß Anspruch 1, ein Schaufelgitter nach Anspruch 9, einen Schaufelkanal gemäß Anspruch 10 und eine Strömungsmaschine nach Anspruch 11. Vorteilhafte Ausführungsformen sind in den Unteransprüchen, der Beschreibung und den Figuren offenbart.

Ein erfindungsgemäßes Schaufelgittersegment für ein Schaufelgitter (z.B. ein Laufschaufelgitter oder ein Leitschaufelgitter) einer Strömungsmaschine umfasst eine Plattform mit einer achsen-asymmetrischen Plattformoberfläche sowie mindestens ein erstes und ein (vorzugsweise im Schaufelgitter zum ersten benachbartes) zweites Schaufelblatt. Die Schaufelblätter haben dabei jeweils eine Druck- und eine Saugseite sowie eine An- und eine Abströmkante.

Die Plattformoberfläche weist eine Erhebung auf, die sich von der Druckseite des ersten Schaufelblattes bis zur Saugseite des zweiten Schaufelblattes erstreckt, d.h. die durchgehend von der genannten Druck- zur genannten Saugseite reicht und die genannten Seiten berührt. Mindestens ein höchster Punkt der Erhebung liegt dabei bei einem erfindungsgemäßen Schaufelgittersegment dichter an der Saugseite des zweiten Schaufelblatts als an der Druckseite des ersten Schaufelblattes.

Als "Erhebung" ist in dieser Schrift eine lokale Ausformung (wie beispielsweise ein Buckel bzw. Vorsprung) der Plattformoberfläche zu verstehen, in der sich die Plattformoberfläche (im Vergleich zu einer Plattformoberfläche einer nicht konturierten Plattform, die in dieser Schrift als das "Nullniveau" darstellend verstanden wird) radial in dieselbe Richtung erstreckt, in der auch die Schaufelblätter von der Plattform abstehen. Bei einer Erhebung auf einer den Ringraum nach radial außen begrenzenden Plattform erstreckt sich eine Erhebung also nach radial innen, bei einer Erhebung auf einer den Ringraum nach radial innen begrenzenden Plattform nach radial außen.

Als "Vertiefung" ist (weiter unten) analog eine lokale Ausformung der Plattformoberfläche in die entgegengesetzte Richtung zu verstehen (wie z.B. eine Senke bzw. Nische). Bei einer Erhebung auf einer den Ringraum nach radial außen begrenzenden Plattform erstreckt sich eine Vertiefung also d.h. nach radial außen, bei einer Vertiefung auf einer den Ringraum nach radial innen begrenzenden Plattform nach radial innen.

Den Bezeichnungen "Erhebung" und "Vertiefung" (ebenso wie Begriffen wie "Höhe", "Tiefe" oder ähnlichem) liegt hier also eine Orientierung bzw. ein Koordinatensystem zugrunde, bei der/dem sich die Schaufelblätter und eine Erhebung von der Plattformoberfläche jeweils nach "oben" erstrecken. Dementsprechend erstreckt sich eine Vertiefung in die entgegengesetzte Richtung nach "unten".

Als höchster bzw. (weiter unten im Text) tiefster Punkt einer Linie, Erhebung oder Vertiefung wird jeweils ein Punkt verstanden, in denen sich diese am weitesten in die jeweilige Richtung erstreckt. Die höchsten bzw. tiefsten Punkte einer Erhebung bzw. Vertiefung können jeweils einen Flächenabschnitt oder eine Kurve ausbilden oder singulär sein. Entsprechend können die höchsten bzw. tiefsten Punkte eine Linie einen Abschnitt der Linie ausbilden oder singulär sein.

Gemäß einer exemplarischen Ausführungsform weisen/weist die Erhebung genau einen höchsten Punkt auf.

Eine Grenzlinie zwischen der Druckseite des ersten Schaufelblattes und der Plattformoberfläche kann mindestens in einem Abschnitt mit einer Begrenzung der Erhebung auf Nullniveau übereinstimmen (so dass die Erhebung die Druckseite dort also nur berührt), und/oder die Grenzlinie kann in einem (ggf. anderen) Abschnitt auf der Erhebung verlaufen (so dass das erste Schaufelblatt dort also sogar auf der Erhebung fußt). Ein höchster Punkt der genannten Grenzlinie (zwischen der Druckseite des ersten Schaufelblattes und der Plattformoberfläche) ist vorzugsweise weniger hoch als der der höchste Punkt der Erhebung.

Analog kann eine Grenzlinie zwischen der Saugseite des zweiten Schaufelblattes und der Plattformoberfläche mindestens in einem Abschnitt mit einer Begrenzung der Erhebung auf Nullniveau übereinstimmen (so dass die Erhebung die Saugseite dort also nur berührt), und/oder die Grenzlinie kann in einem (ggf. anderen Abschnitt) auf der Erhebung verlaufen (so dass das zweite Schaufelblatt dort also sogar auf der Erhebung fußt). Ein höchster Punkt der genannten Grenzlinie (zwischen Saugseite des zweiten Schaufelblattes und der Plattformoberfläche) ist vorzugsweise weniger hoch als der der höchste Punkt der Erhebung.

Insbesondere kann die Erhebung die Druckseite des ersten Schaufelblattes in einer stromauf liegenden Hälfte oder sogar einem am weitesten stromauf liegenden Drittel des Schaufelzwischenstreifens berühren, bzw. mindestens ein Abschnitt des ersten Schaufelblattes kann in der stromauf liegenden Hälfte oder sogar dem am weitesten stromauf liegenden Drittel des Schaufelzwischenstreifens auf der Erhebung fußen.

Bei einer vorteilhaften Weiterbildung der vorliegenden Erfindung fällt die Erhebung vom höchsten Punkt mindestens in einem (jeweiligen) Abschnitt in Umfangsrichtung zur Druckseite des ersten Schaufelblattes und/oder zur Saugseite des zweiten Schaufelblattes hin ab.

Ein erfindungsgemäßes Schaufelgittersegment kann einteilig (d.h. einstückig) oder zusammengesetzt sein. Insbesondere kann die Plattform einteilig sein oder zwei oder mehr Teile umfassen, von denen jeweils eines der Schaufelblätter abstehen kann, oder die Plattform kann als mindestens ein separates Bauteil ausgebildet sein, das zwischen den Schaufelblättern angeordnet ist oder werden kann; insbesondere kann sich die Erhebung der Plattformoberfläche ggf. über zwei oder mehr Teile der Plattform erstrecken. Entsprechend ist eine Plattform für ein erfindungsgemäßes Schaufelgittersegment dazu eingerichtet, in Umfangsrichtung an jeder Seite an ein Schaufelblatt anzugrenzen und mit den Schaufelblättern (von denen keines, eines oder beide fest an die Plattform angeformt sein kann) zusammen ein erfindungsgemäßes Schaufelgittersegment gemäß einer der in dieser Schrift offenbarten erfindungsgemäßen Ausführungsformen auszubilden. Eine mehrteilige Ausbildung des Schaufelgittersegments (bzw. dessen Plattform) kann insbesondere vorteilhaft sein, wenn es sich bei dem zugehörigen Schaufelgitter um ein Laufschaufelgitter handelt.

Die Plattform kann dazu eingerichtet sein, mit ihrer anströmseitigen Plattformkante (mindestens im Wesentlichen) angrenzend an ein weiteres (separates) Element (z.B. der Nabe oder des Gehäuses oder eines anderen Schaufelgitters) in der Strömungsmaschine verwendet zu werden. Die anströmseitige Plattformkante kann dazu eingerichtet sein, einen Abschnitt einer Wandung eines Spaltes auszubilden, durch den Kühlungsfluid in den Ringraum der Strömungsmaschine eingeleitet wird bzw. werden kann.

Ein erfindungsgemäßes Schaufelgitter umfasst mindestens ein erfindungsgemäßes Schaufelgittersegment gemäß einer der in dieser Schrift offenbarten Ausführungsformen. Eine erfindungsgemäße Strömungsmaschine (z.B. ein Flugzeugtriebwerk) umfasst ein oder mehrere erfindungsgemäße(s) Schaufelgitter.

Ein erfindungsgemäßer Schaufelkanal führt durch ein erfindungsgemäßes Schaufelgittersegment gemäß einer der in dieser Schrift offenbarten Ausführungsformen, ist also durch ein derartiges Schaufelgittersegment sowie eine dessen Plattform gegenüberliegende (der Plattformoberfläche zugewandte) Seitenwand begrenzt. In Umfangsrichtung ist ein erfindungsgemäßer Schaufelkanal durch die Druckseite des ersten Schaufelblatts und durch die dieser gegenüberliegende Saugseite des (benachbarten) zweiten Schaufelblatts begrenzt.

Ein erfindungsgemäßes Schaufelgittersegment, ein erfindungsgemäßes Schaufelgitter, ein erfindungsgemäßer Schaufelkanal und eine erfindungsgemäße Strömungsmaschine beeinflussen durch die erfindungsgemäße Geometrie der Plattformoberfläche das statische Druckfeld an der Plattformoberfläche und auf die Schaufeln im Randbereich. Dadurch wird jeweils eine Reduktion der Sekundärströmung, insbesondere von Wirbeln im Schaufelkanal ermöglicht. So können Verluste verringert und die Zuströmung in ein ggf. stromab liegendes weiteres Schaufelgitter verbessert werden.

Das Schaufelgittersegment bzw. das Schaufelgitter bzw. der Strömungskanal bzw. die Plattform können insbesondere Teil einer Niederdruckturbine oder einer Hochdruckturbine eingebaut bzw. dazu eingerichtet sein, in einer Niederdruckturbine bzw. einer Hochdruckturbine bzw. verwendet zu werden. Die Schaufelblätter können jeweils Leit- oder Laufschaufelblätter sein. Die Plattform kann dazu eingerichtet sein, einen Schaufelkanal durch das Schaufelgittersegment nach radial innen oder nach radial außen zu begrenzen.

Gemäß einer bevorzugten Ausführungsform der Erfindung liegt der höchste Punkt der Erhebung innerhalb des Schaufelzwischenstreifens; bezogen auf die Umfangsrichtung liegt der höchste Punkt dann in einer an der Saugseite des zweiten Schaufelblattes liegenden (durch eine Teilungsmitte bestimmten) Hälfte des Schaufelzwischenstreifens. Besonders vorteilhaft ist eine Variante, bei der ein (ohne axiale Abweichung allein) in Umfangsrichtung gemessener Abstand des mindestens einen höchsten Punktes der Erhebung von der Druckseite des ersten Schaufelblattes mindestens doppelt so groß oder sogar mindestens drei mal so groß ist wie der in Umfangsrichtung gemessener Abstand des höchsten Punktes von der Saugseite des zweiten Schaufelblattes.

Bezogen auf die axiale Richtung kann der höchste Punkt vorzugsweise in einer stromab liegenden Hälfte des Schaufelzwischenstreifens liegen. Insbesondere als vorteilhaft hat sich eine Weiterbildung erwiesen, bei der der mindestens eine höchste Punkt wenigstens 50% und/oder höchstens 70% der axialen Gitterbreite des Schaufelgittersegments stromab der Anströmkanten der Schaufelblätter liegt.

Vorzugsweise verläuft eine auf Nullniveau liegende anströmseitige Begrenzung der Erhebung von der Druckseite oder der Anströmkante des ersten Schaufelblattes bis zur Saugseite oder der Anströmkante des zweiten Schaufelblattes, und/oder verläuft eine auf Nullniveau liegende abströmseitige Begrenzung der Erhebung von der Druckseite oder der Abströmkante des ersten Schaufelblattes bis zur Saugseite oder der Abströmkante des zweiten Schaufelblattes. Insbesondere kann die Erhebung vollständig im Schaufelzwischenstreifen angeordnet sein.

Vorteilhaft ist eine Ausführungsform, bei der ein am weitesten stromauf liegender Punkt einer anströmseitigen, auf Nullniveau liegenden Begrenzung der Erhebung mindestens 5% oder sogar mindestens 10% der axialen Gitterbreite stromab der Anströmkanten liegt Bei der vorliegenden Erfindung liegt der genannte Punkt höchstens 20% der axialen Gitterbreite stromab der Anströmkanten liegt. Bei einigen Ausführungsform liegt der genannte Punkt sogar höchstens 15% der axialen Gitterbreite stromab der Anströmkanten.

Die Plattformoberfläche weist eine Vertiefung auf, die zumindest abschnittsweise stromauf des mindestens einen höchsten Punktes der Erhebung angeordnet ist.

Als besonders vorteilhaft hat sich eine Ausführungsform der vorliegenden Erfindung erwiesen, bei der die Plattformoberfläche zusätzlich zur Erhebung mindestens eine Vertiefung aufweist, die vollständig (also mit jedem ihrer Punkte) stromauf des mindestens einen höchsten Punktes der Erhebung angeordnet ist. Es hat sich gezeigt, dass dadurch die Sekundärströmung durch das Schaufelgitter besonders vorteilhaft beeinflusst werden kann.

Vorzugsweise berührt die Vertiefung die Saugseite des zweiten Schaufelblattes oder fußt das zweite Schaufelblatt in einem Abschnitt seiner Saugseite sogar in der Vertiefung.

Insbesondere vorteilhaft ist eine Ausführungsform, bei der eine Ausdehnung der Vertiefung in Umfangsrichtung höchstens 60% oder sogar höchstens die Hälfte des Teilungsabstandes des Schaufelgittersegments beträgt.

Die Vertiefung weist einen Bereich auf, der sich stromauf der Anströmkanten der Schaufelblätter (und damit auch des Schaufelzwischenstreifens) erstreckt.

Die Vertiefung ersteckt sich bis hin zur anströmseitigen Plattformkante: Insbesondere kann eine auf Nullniveau liegende Begrenzungslinie der Vertiefung in einem Abschnitt entlang der anströmseitigen Plattformkante verlaufen, oder die anströmseitige Plattformkante kann sogar die Vertiefung erfassen, also insbesondere (selbst) eine durch die Vertiefung bestimmte Kontur aufweisen.

Gemäß einem vorteilhaften Ausführungsbeispiel liegt mindestens ein tiefster Punkt der Vertiefung in höchstens 5% der axialen Gitterbreite stromauf oder stromab der Anströmkanten der Schaufelblätter, so dass also seine axiale Position um höchstens 5% der axialen Gitterbreite von der axialen Position der Anströmkanten abweicht.

Im Folgenden wird ein Ausführungsbeispiel der Erfindung anhand einer Zeichnung näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: ein Schaufelgittersegment einer ersten exemplarischen, nicht zur Erfindung gehörigen Ausführungsform der vorliegenden Offenbarung in Draufsicht;
- Figur 2:: ein Schaufelgittersegment einer zweiten exemplarischen, nicht zur Erfindung gehörigen Ausführungsform der vorliegenden Offenbarung in Draufsicht; und
- Figur 3:: ein Schaufelgittersegment einer dritten exemplarischen erfindungsgemäßen Ausführungsvariante der vorliegenden Offenbarung in Draufsicht.

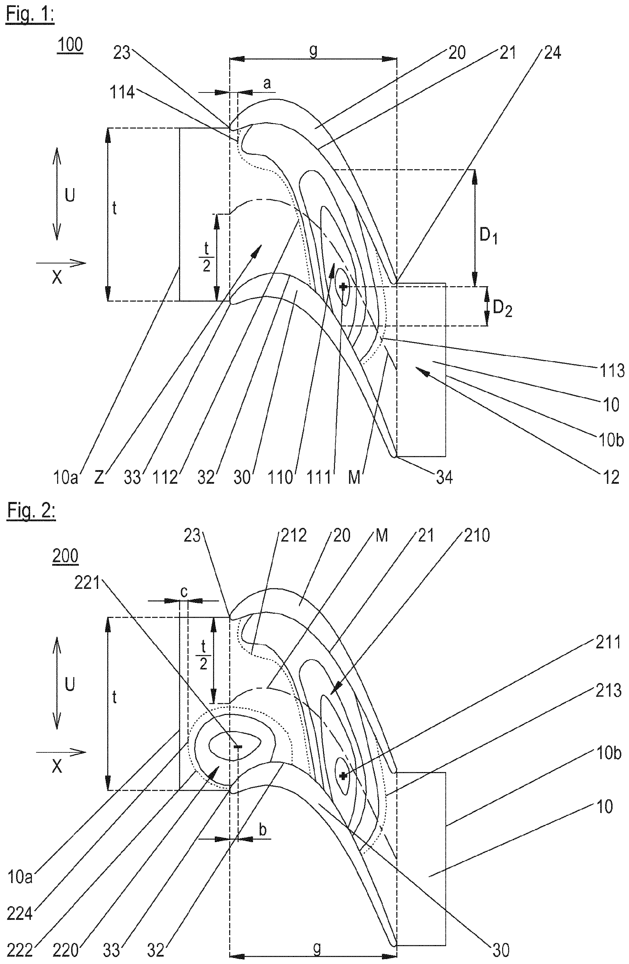

In Figur 1 ist in Draufsicht (mit radialer Blickrichtung) schematisch eine exemplarische, abgewickelte Ausführungsform eines Schaufelgittersegments 100 dargestellt. Es umfasst Schaufelblätter 20, 30, die jeweils eine Druckseite und eine Saugseite aufweisen, sowie eine Plattform 10 mit einer Plattformoberfläche 12, einer (bezogen auf die vorgesehene Hauptstromrichtung X) anströmseitigen Plattformkante 10a und einer abströmseitigen Plattformkante 10b. Die Plattform kann einteilig oder beispielsweise zweiteilig ausgebildet sein (nicht dargestellt), insbesondere kann sie zwei Teile umfassen, von denen jeweils eines der Schaufelblätter 20, 30 absteht.

Die Schaufelblätter definieren einen Schaufelzwischenstreifen Z als den Oberflächenabschnitt, der in Umfangsrichtung U zwischen der Druckseite 21 des ersten Schaufelblattes 20 und der Saugseite 32 des zweiten Schaufelblattes 30 liegt und der in axialer Richtung X anströmseitig durch eine Verbindung der Anströmkanten 23, 33 der Schaufelblätter 20, 30 und abströmseitig durch eine Verbindung der jeweiligen Abströmkanten 24, 34 begrenzt wird. Die genannten Verbindungen verlaufen dabei auf der Plattformoberfläche 12 rein in Umfangsrichtung U (also ohne Abweichung in axialer Richtung), und sie haben einen Abstand voneinander, welcher der axialen Gitterbreite g des Schaufelgittersegments entspricht. Ein Teilungsabstand t ist als der Abstand der Anströmkanten 23, 33 voneinander an der Plattformoberfläche definiert.

Die Plattformoberfläche 12 weist im Schaufelzwischenstreifen Z eine Erhebung 110 auf, die in der Figur 1 jeweils durch Höhenlinien kenntlich gemacht ist und die sich von der Druckseite 21 des ersten Schaufelblattes 20 bis zur Saugseite 32 des zweiten Schaufelblattes 30 erstreckt. Ein höchster Punkt 111 der Erhebung 110 liegt in einer in der Figur 1 durch eine Teilungsmitte M (die jeweils die Mitte des rein in Umfangsrichtung bestimmten Abstands zwischen der Druckseite 21 des ersten Schaufelblattes 20 und der Saugseite 32 des zweiten Schaufelblattes 30 markiert) gekennzeichneten saugseitigen Hälfte des Schaufelzwischenstreifens Z, der höchste Punkt 11 liegt somit dichter an der Saugseite 32 des zweiten als an der Druckseite des ersten Schaufelblattes. Im vorliegenden Beispiel ist ein rein in Umfangsrichtung gemessener Abstand D₁ des höchsten Punktes 111 von der genannten Druckseite 21 sogar mehr als doppelt so groß wie der rein in Umfangsrichtung gemessene Abstand D₂ zur besagten Saugseite.

In der Ausführungsform der Figur 1 weist die genannte Erhebung 110 genau einen höchsten Punkt 111 bzw. ein entsprechendes lokales absolutes Maximum auf.

Eine anströmseitige Begrenzung 112 und eine abströmseitige Begrenzung 113 der Erhebung 110 verlaufen im in der Figur 1 gezeigten Ausführungsbeispiel auf Nullniveau jeweils von der genannten Druckseite 21 zur genannten Saugseite 32. Dazwischen fußen die Schaufelblätter 20, 30 jeweils auf der Erhebung 110, wie aus den Höhenlinien zu erkennen ist. Ein auf der Erhebung 110 liegender (in der Figur nicht markierter) höchster Punkt einer Grenzlinie zwischen der Saugseite 32 des zweiten Schaufelblattes 30 und der Plattformoberfläche 12 ist dabei weniger hoch als der höchste Punkt 111 der Erhebung und höher als ein auf der Erhebung 110 liegender (ebenfalls nicht markierter) höchster Punkt einer Grenzlinie zwischen der Druckseite 21 des ersten Schaufelblattes 20 und der Plattformoberfläche. Insbesondere ist die Plattformoberfläche 112 achsen-asymmetrisch ausgebildet.

Ein am weitesten stromauf liegender Punkt 114 der anströmseitigen Begrenzung 112 der Erhebung 110 hat eine axiale Position, die gegenüber den Anströmkanten 23, 33 um den Abstand a in axialer Hauptromrichtung X verschoben ist. Dabei ist g/20 ≤ a ≤ g/5, so dass der am weitesten stromauf liegende Punkt 114 also mindestens 5% und höchstens 20% der axialen Gitterbreite g stromab der Anströmkanten 23, 33 der Schaufelblätter 20, 30 liegt.

Der Punkt 114 liegt dabei im gezeigten Beispiel in einer (durch die Teilungsmitte M gekennzeichneten) druckseitigen Hälfte des Schaufelzwischenstreifens Z.

Figur 2 zeigt eine alternative Ausführungsform eines abgewickelten Schaufelgittersegments 200 in Draufsicht (mit radialer Blickrichtung). Es umfasst wie das in Figur 1 gezeigte Schaufelgittersegment 100 Schaufelblätter 20, 30 und eine Plattform 10 mit einer achsen-asymmetrischen Plattformoberfläche 12.

Die Plattformoberfläche des in Figur 2 dargestellten Schaufelgittersegments 200 weist eine sich von der Druckseite 21 des ersten Schaufelblatts 20 bis zur Saugseite des zweiten Schaufelblattes 30 erstreckende Erhebung 210 mit einem höchsten Punkt 211 auf, der dichter an der genannten Saugseite 32 liegt als an der besagten Druckseite 21. Die Erhebung 210 des in der Figur 2 gezeigten exemplarischen Schaufelgittersegments 200 ist im gezeigten Beispiel wie die in der Figur 1 dargestellte Erhebung 110 ausgebildet und wird daher nicht näher beschrieben.

Das Schaufelgittersegment 200 weist an der Plattformoberfläche 12 zudem eine Vertiefung 220 auf, die in der Figur 2 ebenfalls durch Höhenlinien gekennzeichnet ist und die vollständig (mit jedem ihrer Punkte) stromauf des höchsten Punktes 211 der Erhebung 210 angeordnet ist und an die Saugseite 32 des zweiten Schaufelblattes 30 heranreicht; im gezeigten Beispiel fußt ein Abschnitt des zweiten Schaufelblattes an dessen Saugseite 32 sogar in der Vertiefung 220.

Ein tiefster Punkt 221 der Vertiefung 220 hat eine axiale Position, die um einen Abstand b stromab der Anströmkanten 23, 33 liegt. Dabei ist b ≤ g/20, der tiefste Punkt 221 liegt also nicht weiter als 5% der axialen Gitterbreite g stromab der Anströmkanten.

Die Vertiefung 220 weist eine Begrenzung 222 auf Nullniveau auf. Die Begrenzung 222 erstreckt sich dabei von der Saugseite 32 des zweiten Schaufelblattes 30 in den Schaufelzwischenstreifen hinein und wieder zur Saugseite 32. Die Begrenzung 222 und ein Abschnitt der Grenzlinie zwischen Plattformoberfläche 12 und Saugseite 32 umranden dabei zusammen die Vertiefung 220; insbesondere fußt das zweite Schaufelblatt 30 an seiner Saugseite in seinem anströmseitigen Drittel des Schaufelzwischenstreifens n der Vertiefung.

Ein Teil der Vertiefung 220 liegt stromauf der Anströmkanten 23, 33 der Schaufelblätter 20, 30. Dabei ist die Vertiefung 220 vollständig stromab der anströmseitigen Plattformkante 10a angeordnet. Ein am weitesten stromauf liegender Punkt 224 der Begrenzung 222 hat sogar einen (in axialer Richtung X gemessenen) positiven Abstand c > 0 von der anströmseitigen Plattformkante 10a.

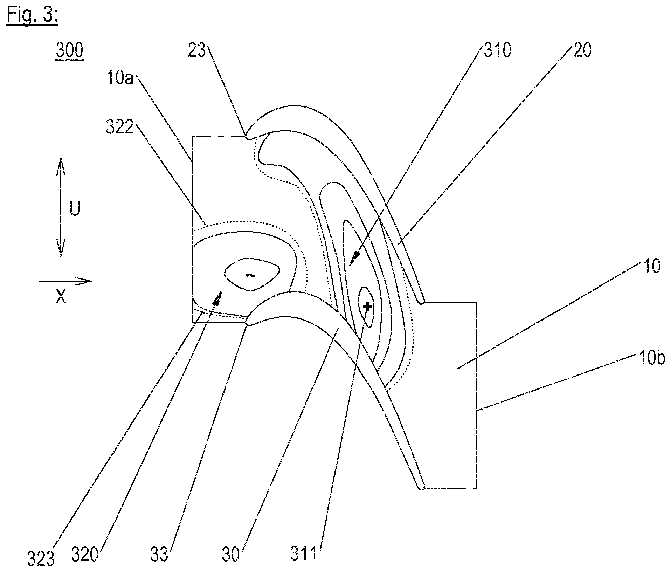

In der Figur 3 ist ein Ausführungsbeispiel eines erfindungsgemäßen Schaufelgittersegments 300 dargestellt. Es umfasst wie die in den Figuren 1 und 2 gezeigten Schaufelgittersegmente 100, 200 zwei Schaufelblätter 20, 30 und eine erfindungsgemäße Plattform 10 mit einer einen Schaufelzwischenstreifen umfassenden, achsen-asymmetrischen Plattformoberfläche. Diese weist eine sich von der Druckseite 21 des ersten Schaufelblatts 20 bis zur Saugseite des zweiten Schaufelblattes 30 erstreckende Erhebung 310 mit einem höchsten Punkt 311 auf, der dichter an der genannten Saugseite 32 liegt als an der besagten Druckseite 21. Die Erhebung 310 des in der Figur 3 gezeigten exemplarischen erfindungsgemäßen Schaufelgittersegments 300 ist im gezeigten Beispiel wie die in den Figur 1 und 2 jeweils dargestellten Erhebungen 110, 210 ausgebildet und wird daher nicht näher beschrieben; es versteht sich, dass gleichwohl auch andere Ausbildungen im Rahmen der vorliegenden Erfindung möglich sind.

Die Plattformoberfläche 12 des Schaufelgittersegments 300 weist zudem eine Vertiefung 320 auf, die in der Figur wiederum durch Höhenlinien gekennzeichnet ist. Die Vertiefung 320 liegt vollständig stromauf des höchsten Punktes 311 der Erhebung 310 und reicht an die Saugseite 32 des zweiten Schaufelblattes 30 heran; im gezeigten Beispiel fußt ein Abschnitt des zweiten Schaufelblattes an dessen Saugseite 32 und an dessen Anströmkante 33 sogar in der Vertiefung 320.

Die Vertiefung 320 erstreckt sich bis zur anströmseitigen Plattformkante 10a und wird sogar von dieser erfasst: Begrenzungen 322, 323 der Vertiefung 320 auf Nullniveau verlaufen jeweils vom zweiten Schaufelblatt 30 zur anströmseitigen Plattformkante 10a und sind an dieser voneinander beabstandet. Insbesondere weist die anströmseitige Plattformkante 10a eine Kontur auf, die durch die Vertiefung bestimmt ist.

Offenbart ist ein Schaufelgittersegment 100, 200, 300 mit mindestens zwei Schaufelblättern 20, 30 und einer Plattform 10, die eine achsen-asymmetrische Plattformoberfläche 12 hat. Diese weist eine Erhebung 110, 210, 310 auf, die sich von der Druckseite 21 des ersten zur Saugseite 32 des zweiten Schaufelblattes 30 erstreckt. Ein höchster Punkt 111, 211, 311 der Erhebung liegt dichter an der Saugseite 32 des zweiten Schaufelblatts 30 als an der Druckseite 21 des ersten Schaufelblattes 20. Offenbart sind ferner ein Schaufelgitter, eine Plattform, eine Schaufelkanal und eine Strömungsmaschine.

### Bezugszeichen

- 10: Plattform
- 10a: anströmseitige Plattformkante
- 10b: abströmseitige Plattformkante
- 20, 30: Schaufelblatt
- 21: Druckseite des ersten Schaufelblatts 20
- 23, 33: Anströmkante
- 24, 34: Abströmkante
- 32: Saugseite des zweiten Schaufelblatts 30
- 100, 200 300: Schaufelgittersegment
- 110, 210, 310: Erhebung
- 111, 211, 311: höchster Punkt der Erhebung
- 112, 212: anströmseitige Begrenzung der Erhebung auf Nullniveau
- 113, 213: abströmseitige Begrenzung der Erhebung auf Nullniveau
- 114: am weitesten stromauf liegender Punkt der Begrenzung 112
- 112, 122, 142: höchster Punkt der Erhebung
- 220, 320: Vertiefung
- 221: tiefster Punkt der Vertiefung
- 222, 322, 323: Begrenzung der Vertiefung auf Nullniveau
- 224: am weitesten stromauf liegender Punkt der Begrenzung 222
- a: axialer Abstand des Punktes 114 von den Anströmkanten
- b: axialer Abstand des Punktes 221 von den Anströmkanten
- c: axialer Abstand des Punktes 224 von der anströmseitigen Plattformkante 10a
- g: axiale Gitterbreite
- t: Teilungsabstand
- D₁: in Umfangsrichtung gemessener Abstand des höchsten Punktes 111 von der Druckseite des ersten Schaufelblattes
- D₂: in Umfangsrichtung gemessener Abstand des höchsten Punktes 111 von der Saugseite des zweiten Schaufelblattes
- M: Teilungsmitte
- U: Umfangsrichtung
- X: vorgesehene axiale Hauptstromrichtung
- Z: Schaufelzwischenstreifen

## Patentansprüche

1. Schaufelgittersegment (100, 200, 300) eines Schaufelgitters für eine Strömungsmaschine, wobei das Schaufelgittersegment eine Plattform (10) mit einer achsen-asymmetrischen Plattformoberfläche (12), eine axialen Gitterbreite sowie mindestens zwei Schaufelblätter (20, 30) mit jeweiligen Anströmkanten umfasst, wobei die Plattformoberfläche eine Erhebung (110, 210, 310) aufweist, die sich von der Druckseite (21) eines ersten der Schaufelblätter (20) bis zur Saugseite (32) eines zweiten der Schaufelblätter (30) erstreckt und die eine auf einem Nullniveau liegende anströmseitige Begrenzung aufweist,
**dadurch gekennzeichnet, dass** mindestens ein höchster Punkt (111, 211, 311) der Erhebung dichter an der Saugseite (32) des zweiten Schaufelblatts liegt als an der Druckseite (21) des ersten Schaufelblattes und ein am weitesten stromauf liegender Punkt der anströmseitigen Begrenzung der Erhebung höchstens 20% der axialen Gitterbreite stromab der Anströmkanten liegt, wobei die Plattformoberfläche (12) zudem eine Vertiefung (220, 320) aufweist, die zumindest abschnittsweise stromauf des mindestens einen höchsten Punktes (111, 211, 311) der Erhebung angeordnet ist, wobei die Vertiefung (220, 320) einen Bereich aufweist, der stromauf der Anströmkanten (23, 33) der Schaufelblätter liegt, und die Vertiefung (320) sich bis zu einer anströmseitigen Plattformkante (10a) erstreckt.

2. Schaufelgittersegment nach Anspruch 1, wobei der mindestens eine höchste Punkt (111, 211, 311) wenigstens 50% und/oder höchstens 70% der axialen Gitterbreite (g) des Schaufelgittersegments stromab der Anströmkanten (23, 33) der Schaufelblätter (20, 30) liegt.

3. Schaufelgittersegment gemäß einem der Ansprüche 1 oder 2, wobei ein in Umfangsrichtung (U) gemessener Abstand (D₁) des mindestens einen höchsten Punktes (111, 211, 311) der Erhebung von der Druckseite (21) des ersten Schaufelblattes mindestens doppelt so groß oder sogar mindestens dreimal so groß ist wie ein in Umfangsrichtung gemessener Abstand (D₂) des höchsten Punktes (111, 211, 311) von der Saugseite (32) des zweiten Schaufelblattes.

4. Schaufelgittersegment gemäß einem der vorhergehenden Ansprüche, wobei ein am weitesten stromauf liegender Punkt (114) einer anströmseitigen Begrenzung (112, 212) der Erhebung (110, 210, 310) mindestens 5% oder sogar mindestens 10% der axialen Gitterbreite (g) stromab der Anströmkanten (23, 33) der Schaufelblätter liegt.

5. Schaufelgittersegment gemäß einem der vorhergehenden Ansprüche, wobei die Vertiefung (220, 320) vollständig stromauf des mindestens einen höchsten Punktes (111, 211, 311) der Erhebung angeordnet ist.

6. Schaufelgittersegment gemäß Anspruch 5, wobei die Vertiefung die Saugseite (32) des zweiten Schaufelblattes berührt oder wobei das zweite Schaufelblatt (30) in einem Abschnitt seiner Saugseite (32) in der Vertiefung (220, 320) fußt.

7. Schaufelgittersegment gemäß einem der Ansprüche 5 bis 6, wobei ein tiefster Punkt (221) der Vertiefung höchstens 5% der axialen Gitterbreite (g) stromauf oder stromab der Anströmkanten (23, 33) der Schaufelblätter angeordnet ist.

8. Schaufelgittersegment gemäß einem der vorhergehenden Ansprüche, wobei das Schaufelgitter ein Leitschaufelgitter oder ein Laufschaufelgitter ist.

9. Schaufelgitter für eine Strömungsmaschine, das mindestens ein Schaufelgittersegment (100, 200) nach einem der vorangehenden Ansprüche umfasst.

10. Schaufelkanal einer Strömungsmaschine, der durch ein Schaufelgittersegment (100, 200, 300) nach einem Ansprüche 1 bis 8 sowie durch eine der Plattform (10) des Schaufelgittersegments gegenüberliegende Seitenwand begrenzt ist.

11. Strömungsmaschine mit mindestens einem Schaufelgitter gemäß Anspruch 9.

## Claims

1. Blade cascade segment (100, 200, 300) of a blade cascade for a turbomachine, the blade cascade segment comprising a platform (10) having an axially asymmetric platform surface (12), an axial cascade width and at least two airfoils (20, 30) having respective leading edges,
the platform surface having an elevation (110, 210, 310) which extends from the pressure side (21) of a first of the airfoils (20) to the suction side (32) of a second of the airfoils (30) and which has an inflow-side boundary lying at a zero level,
**characterized in that** at least one highest point (111, 211, 311) of the elevation lies closer to the suction side (32) of the second airfoil than to the pressure side (21) of the first airfoil and a furthest-upstream point of the inflow-side boundary of the elevation lies at at most 20% of the axial cascade width downstream of the leading edges, the platform surface (12) also having a recess (220, 320) which is arranged at least partly upstream of the at least one highest point (111, 211, 311) of the elevation, the recess (220, 320) having a region that is upstream of the leading edges (23, 33) of the airfoils, and the recess (320) extending as far as an inflow-side platform edge (10a).

2. Blade cascade segment according to claim 1, wherein the at least one highest point (111, 211, 311) lies at at least 50% and/or at most 70% of the axial cascade width (g) of the blade cascade segment downstream of the leading edges (23, 33) of the airfoils (20, 30).

3. Blade cascade segment according to either claim 1 or 2, wherein a distance (D₁), measured in the circumferential direction (U), of the at least one highest point (111, 211, 311) of the elevation from the pressure side (21) of the first airfoil is at least twice as large or even at least three times as large as a distance (D₂), measured in the circumferential direction, of the highest point (111, 211, 311) from the suction side (32) of the second airfoil.

4. Blade cascade segment according to any of the preceding claims, wherein a furthest-upstream point (114) of an inflow-side boundary (112, 212) of the elevation (110, 210, 310) lies at at least 5% or even at least 10% of the axial cascade width (g) downstream of the leading edges (23, 33) of the airfoils.

5. Blade cascade segment according to any of the preceding claims, wherein the recess (220, 320) is arranged completely upstream of the at least one highest point (111, 211, 311) of the elevation.

6. Blade cascade segment according to claim 5, wherein the recess contacts the suction side (32) of the second airfoil or wherein the second airfoil (30) rests, in a portion of its suction side (32), in the recess (220, 320).

7. Blade cascade segment according to any of claims 5 to 6, wherein a deepest point (221) of the recess is arranged at at most 5% of the axial cascade width (g) upstream or downstream of the leading edges (23, 33) of the airfoils.

8. Blade cascade segment according to any of the preceding claims, wherein the blade cascade is a guide vane cascade or a rotor blade cascade.

9. Blade cascade for a turbomachine, comprising at least one blade cascade segment (100, 200) according to any of the preceding claims.

10. Blade channel of a turbomachine, which is delimited by a blade cascade segment (100, 200, 300) according to any of claims 1 to 8, and by a lateral wall which is opposite the platform (10) of the blade cascade segment.

11. Turbomachine having at least one blade cascade according to claim 9.

## Revendications

1. Segment de grille d'aubes (100, 200, 300) d'une grille d'aubes pour une turbomachine, dans lequel le segment de grille d'aubes comprend une plate-forme (10) comportant une surface de plate-forme (12) asymétrique par rapport à l'axe, une largeur axiale de grille ainsi qu'au moins deux pales d'aube (20, 30) comportant des bords d'attaque respectifs,
dans lequel la surface de plate-forme présente une élévation (110, 210, 310) qui s'étend depuis le côté pression (21) d'une première des pales d'aube (20) jusqu'au côté aspiration (32) d'une seconde des pales d'aube (30) et qui présente une limite côté amont située à un niveau zéro,
**caractérisé en ce qu'**au moins un point le plus haut (111, 211, 311) de l'élévation est plus proche du côté aspiration (32) de la seconde pale d'aube que du côté pression (21) de la première pale d'aube, et un point le plus en amont de la limite amont de l'élévation est situé au plus à 20 % de la largeur axiale de grille en aval des bords d'attaque, dans lequel la surface de plate-forme (12) présente en outre un renfoncement (220, 320) disposé au moins dans certaines sections en amont de l'au moins un point le plus haut (111, 211, 311) de l'élévation, dans lequel le renfoncement (220, 320) présente une zone située en amont des bords d'attaque (23, 33) des pales d'aube, et le renfoncement (320) s'étend jusqu'à un bord de plate-forme (10a) côté amont.

2. Segment de grille d'aubes selon la revendication 1, dans lequel l'au moins un point le plus haut (111, 211, 311) est situé à au moins 50 % et/ou au plus 70 % de la largeur axiale de grille (g) du segment de grille d'aubes en aval des bords d'attaque (23, 33) des pales d'aube (20, 30).

3. Segment de grille d'aubes selon l'une des revendications 1 ou 2, dans lequel une distance (D₁), mesurée dans la direction circonférentielle (U), entre l'au moins un point le plus haut (111, 211, 311) de l'élévation et le côté pression (21) de la première pale d'aube est au moins deux fois, ou encore au moins trois fois, supérieure à une distance (D₂), mesurée dans la direction circonférentielle, entre le point le plus haut (111, 211, 311) et le côté aspiration (32) de la seconde pale d'aube.

4. Segment de grille d'aubes selon l'une des revendications précédentes, dans lequel un point le plus en amont (114) d'une limite côté amont (112, 212) de l'élévation (110, 210, 310) est situé à au moins 5 %, ou encore à au moins 10 %, de la largeur axiale de grille (g) en aval des bords d'attaque (23, 33) des pales d'aube.

5. Segment de grille d'aubes selon l'une des revendications précédentes, dans lequel le renfoncement (220, 320) est disposé entièrement en amont de l'au moins un point le plus haut (111, 211, 311) de l'élévation.

6. Segment de grille d'aubes selon la revendication 5, dans lequel le renfoncement est en contact avec le côté aspiration (32) de la seconde pale d'aube ou dans lequel la seconde pale d'aube (30) repose sur le renfoncement (220, 320) dans une section de son côté aspiration (32).

7. Segment de grille d'aubes selon l'une des revendications 5 à 6, dans lequel un point le plus bas (221) du renfoncement est disposé au plus à 5 % de la largeur axiale de grille (g) en amont ou en aval des bords d'attaque (23, 33) des pales d'aube.

8. Segment de grille d'aubes selon l'une des revendications précédentes, dans lequel la grille d'aubes est une grille d'aubes directrices ou une grille d'aubes mobiles.

9. Grille d'aubes pour une turbomachine, comprenant au moins un segment de grille d'aubes (100, 200) selon l'une des revendications précédentes.

10. Canal d'aube d'une turbomachine, lequel est délimité par un segment de grille d'aubes (100, 200, 300) selon l'une des revendications 1 à 8 ainsi que par une paroi latérale opposée à la plate-forme (10) du segment de grille d'aubes.

11. Turbomachine comportant au moins une grille d'aubes selon la revendication 9.
